# EUROPEAN PATENT APPLICATION

(11) **EP 2 843 231 A1**
(43) Date of publication of application: **04.03.2015**
(21) Application number: 13190926.9
(22) Date of filing: 30.10.2013
(51) Int. Cl.: F04B 35/04, F04B 35/06, F04B 39/00, F04B 39/12, F04B 39/14

(54) **Flywheel device of an air compressor of a tire repair machine**

(30) Priority: 27.08.2013 TW 102130658
(71) Applicant: Active Tools International (HK) Ltd., Causeway Bay Hong Kong (CN)
(72) Inventor: Hong, David, Causeway Bay (CN)
(74) Representative: Walker, Ross Thomson

(57) **Abstract**

A flywheel device of an air compressor of a tire repair machine is provided; the flywheel comprises a primary gear and a flywheel fixed on a side surface of the primary gear. An axial length of the overall flywheel device is shorter, and the flywheel device has a simpler structure. Thus, a size of the flywheel device can be reduced, other elements of the tire repair machine can be arranged more rationally, and the manufacturing cost can be reduced.

## Description

This application claims the priority of a Taiwanese invention application No. 102130658 filed on August 27, 2013, the entire content of which is hereby incorporated by reference.

### FIELD OF THE INVENTION

The present application relates to an improved structure of a flywheel device of an air compressor used in a portable tire repair machine.

### BACKGROUND OF THE INVENTION

When a tire of a vehicle is broken, the vehicle cannot run due to loss of tire pressure. Until the broken tire is replaced by a new one, or is repaired and aerated, the vehicle can run again. Therefore, vehicles are generally equipped with spare tires for coping with contingencies. However, the weight of a spare tire with a rim will increase the total weight of a vehicle and consume more fuel, which is wasteful and may adversely affect environmental protection. In order to decrease the weight of a spare tire attached on a vehicle, some manufacturers produce relatively lighter tire repair machines equipped in vehicles. Once a tire is broken and leaks, such a tire repair machine can be taken out for emergency repair and inflation.

A well-known tire repair machine can also be used as a tire inflator. The tire repair machine generally includes a case, a glue bucket, and an air compressor, and both the glue bucket and the air compressor are received inside the case. The glue bucket is connected with a glue pipe, and the air compressor is connected with an air pipe. One end of the glue pipe is provided with a glue nozzle, and one end of the air pipe is provided with an air nozzle. When the tire repair machine is used as a tire inflator, a user can connect the air nozzle to an air tap of a tire directly, and then turn on the air compressor to inject compressed air into the tire. When the tire repair machine performs a repairing function, the glue nozzle needs to be connected to an air tap of a tire, and then a pump is turned on to inject glue accommodated in the glue bucket into the tire. Afterwards, the glue nozzle is removed, the air nozzle is connected to the air tap of the tire, and compressed air is injected into the tire to generate a proper tire pressure. Thus, the air nozzle is removed, and a vehicle using the tire is driven to run a distance slowly, so that the glue flows uniformly on an inner surface of the tire and is filled in broken portions. After the glue is solidified, air leakage of the tire can be arrested, and the vehicle can be driven to reach the nearest repair station for further inspection.

The aforementioned air compressor of the tire repair machine should be provided with a cylinder seat, and a cylinder, a motor, and a transmission device should be fixed on the cylinder seat. The transmission device acts as a connecting medium between the motor and the cylinder, and usually includes a primary gear, a flywheel, a connecting rod, and a plunger. The plunger is connected to one end of the connecting rod, and the other end of the connecting rod is connected to the flywheel and acts as a pivot of the flywheel. The flywheel is further connected to the primary gear. The primary gear engages with a driving gear fixed on a driving shaft of the motor. Thus, when the motor is working, the driving gear of the motor drives the primary gear and the flywheel to rotate, and further drives the plunger to reciprocate in the cylinder via the connecting rod. In this way, compressed air is generated in the cylinder, and the compressed air can be used for aerating tires or injecting glue into the tires.

However, in the aforementioned well-known transmission device, the primary gear is movably connected to the flywheel. Therefore, when the primary gear is assembled with the flywheel, an axial length of the subassembly comprising the primary gear and the flywheel may be too long, and an overall size of the transmission device may be too large correspondingly. Thus, the assembly process of the air compressor may be complicated, and the air compressor may consume much manufacturing cost.

### SUMMARY OF THE INVENTION

The objective of the present application is to solve this problem: in a flywheel device of an air compressor of a well-known tire repair machine, a primary gear of the flywheel device is movably connected to a flywheel; therefore, when the primary gear is assembled with the flywheel, an axial length of the subassembly comprising the primary gear and the flywheel is too long, and an overall size of the transmission device is too large correspondingly; the assembly process is complicated, and consumes much manufacturing cost.

The present application provides a flywheel device of an air compressor of a tire repair machine, wherein, a flywheel is fixed on a side surface of a primary gear directly, so that a size of the flywheel device of the tire repair machine is reduced, and the structure of the tire repair machine is simpler. Thus, other elements are more convenient to assemble, and the manufacturing cost can be reduced.

In one embodiment, the flywheel device of the air compressor of the tire repair machine of the present application comprises the primary gear and the flywheel, and the flywheel is fixed on a side surface of the primary gear directly. Thus, an axial length of the subassembly comprising the primary gear and the flywheel is reduced when the primary gear is assembled with the flywheel, and an overall size of the flywheel is reduced correspondingly.

In another embodiment, in the flywheel device of the present application, a plurality of threaded holes are defined in a side surface of the aforementioned primary gear, and axes of the threaded holes are parallel to an axial direction of the primary gear; and a plurality of cavities corresponding to the threaded holes are defined in the flywheel, and axes of the cavities are parallel to an axial direction of the flywheel. A plurality of screws run through the cavities and are fixed in the threaded holes respectively to fix the flywheel on the primary gear.

In the present application, the flywheel is assembled on a side surface of the primary gear, so that an axial length of the overall flywheel device is shorter, and the flywheel device has a simpler structure. Thus, a size of the flywheel device can be reduced, other elements of the tire repair machine can be arranged more rationally, and the manufacturing cost can be reduced.

### BRIEF DESCRIPTION OF THE DRAWINGS

The present application will be further described with reference to the accompanying drawings and embodiments in the following, in the accompanying drawings:
Fig. 1 is an exploded view of an assembly relation between a primary gear and a flywheel of a flywheel device of the present application;
Fig. 2 is an exploded view of an assembly relation between the flywheel device and other elements of the present application;
Fig. 3 is a perspective view of the flywheel device and the other elements assembled together, in accordance with an embodiment of the present application;
Fig. 4 is a plan view of the flywheel device and the other elements assembled together, in accordance with the embodiment of the present application;
Fig. 5 is a cut-away view of the flywheel device along the A-A direction shown in Fig. 4;
Fig. 6 is a cut-away view of the flywheel device along the B-B direction shown in Fig. 4.

### BRIEF DESCRIPTION OF THE SYMBOLS

1-flywheel device; 11-primary gear; 110-gear central hole; 111-threaded hole; 12-flywheel; 120-flywheel center hole; 121-cavity; 122-eccentric hole; 13-screw; 2-plunger; 21-connecting rod; 22-first axle; 25-second axle; 23-first bearing; 24-second bearing; 3-seat board; 31-cylinder; 310-opening; 32-motor seat; 33-through-hole; 4-one-way valve device; 41-air inlet; 42-first air outlet; 43-second air outlet; 44-valve plate; 45-spring; 5-pressure gage; 6-motor; 61-driving gear.

### DETAILED DESCRIPTION OF THE PREFERRED EMBODIMENT

To make the technical feature, objective and effect of the present application be understood more clearly, now the specific implementation of the present application is described in detail with reference to the accompanying drawings and embodiments.

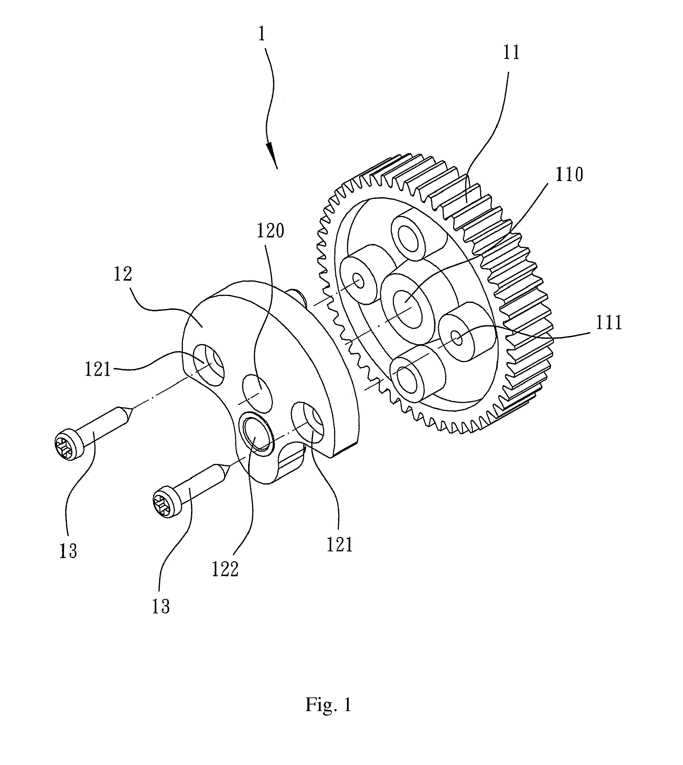

As shown in Fig. 1, the present application provides a flywheel device 1 of an air compressor of a tire repair machine. In a preferred embodiment, the flywheel device 1 comprises a primary gear 11 and a flywheel 12. A gear central hole 110 is defined in the center of the primary gear 11. A plurality of threaded holes 111 are defined in a side surface of the primary gear 11, and axes of the threaded holes 111 are parallel to an axial direction of the primary gear 11. A flywheel center hole 120 corresponding to the gear central hole 110 is defined in the center of the flywheel 12. A plurality of the cavities 121 corresponding to the threaded holes 111 and an eccentric hole 122 are defined in the flywheel 12, and axes of the cavities 121 are parallel to an axial direction of the flywheel 12. A plurality of screws 13 can run through the cavities 121 and be fixed in the threaded holes 111 respectively to fix the flywheel 12 on the primary gear 11, at the same time, the flywheel center hole 120 can be aligned with the gear central hole 110. The flywheel 12 is not circular (in the present application, the flywheel 12 is approximately fan-shaped), and therefore the center of gravity of the primary gear 11 is eccentric when the flywheel 12 is fixed on the primary gear 11.

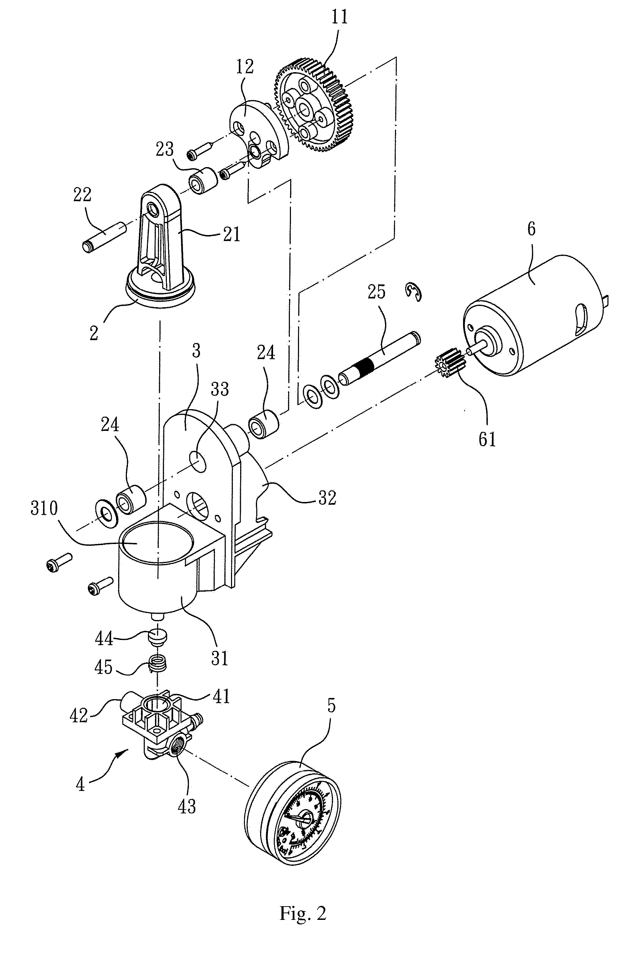

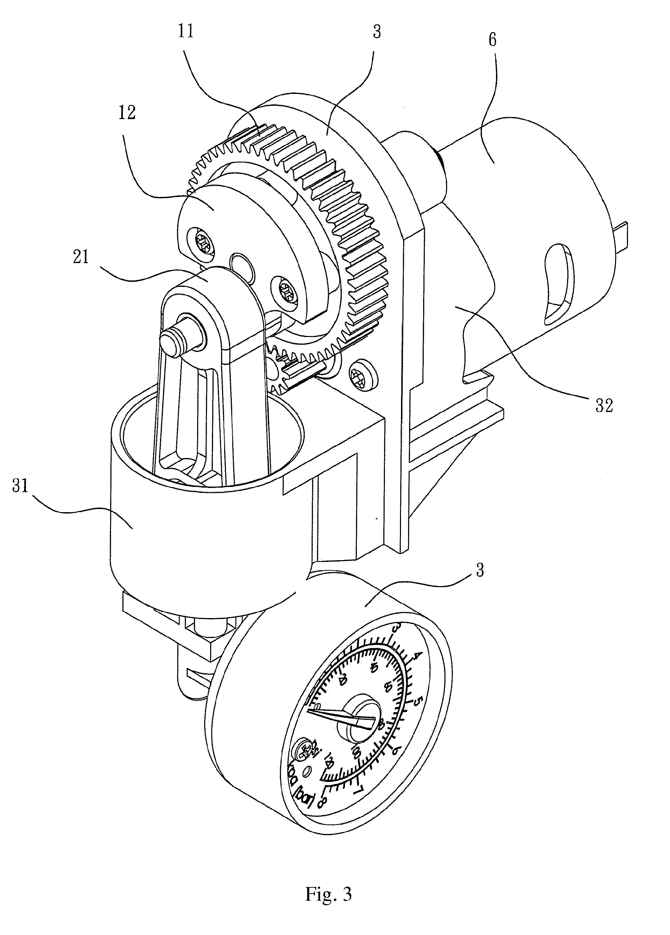

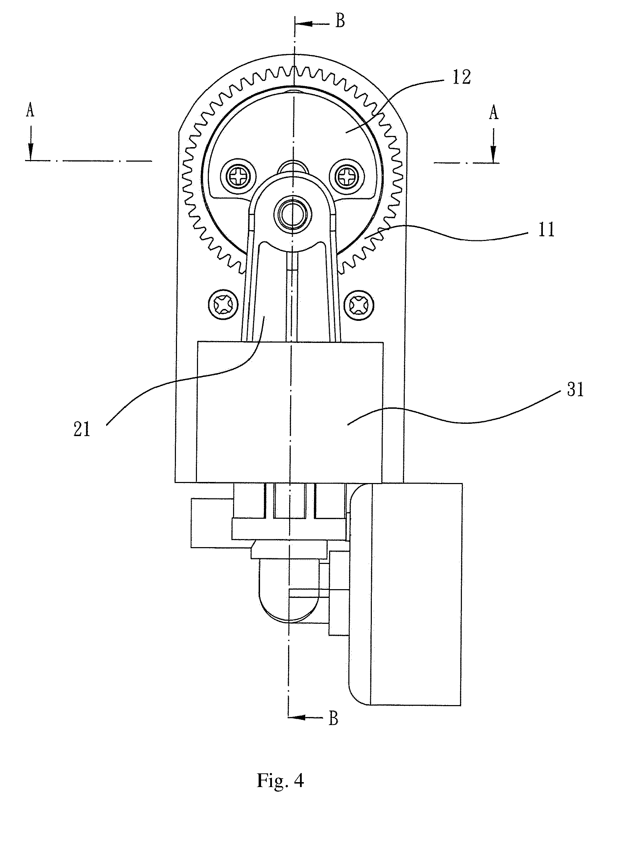

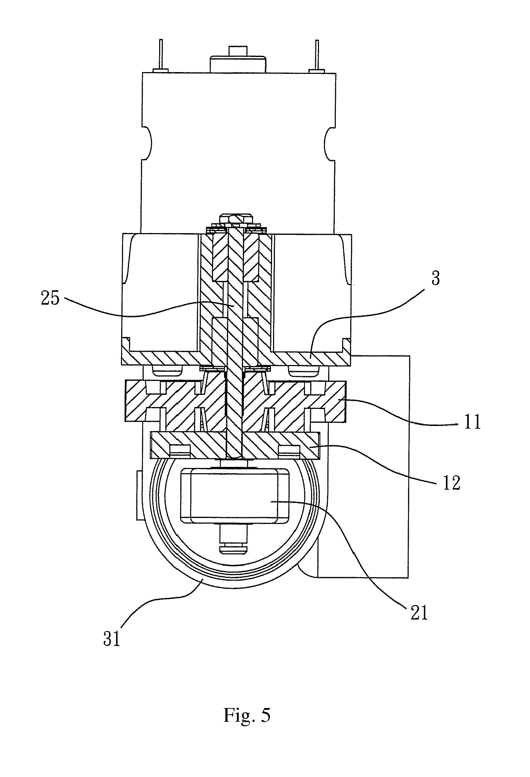

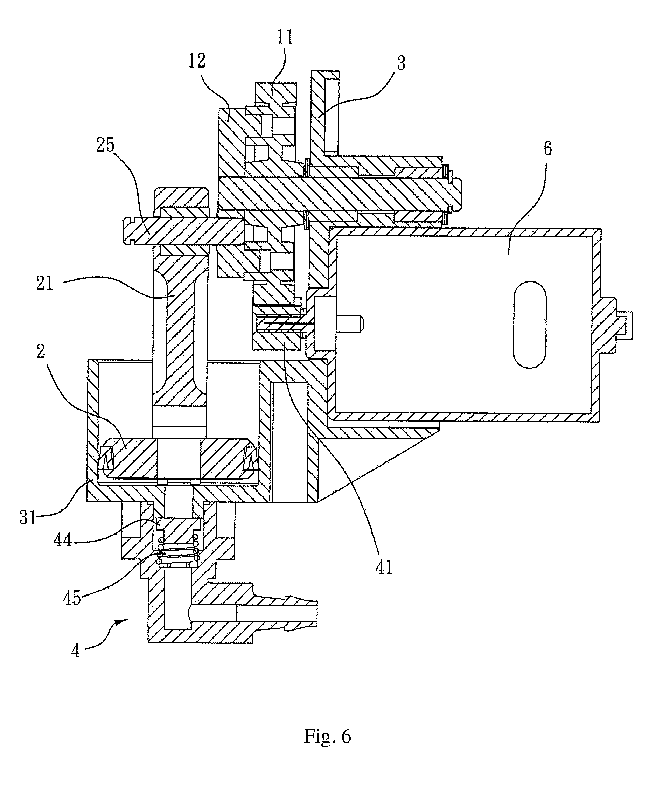

As shown in Fig. 2, the aforementioned flywheel device 1 acts as a transmission medium between a motor 6 of the air compressor of the tire repair machine and a plunger 2 disposed in a cylinder 31. The air compressor includes a seat board 3, and the cylinder 31 and a motor seat 32 are respectively mounted on two opposite side surfaces (hereinafter referred to as "a first surface" and "a second surface") of the seat board 3. A through-hole 33 running through the first surface and the second surface of the seat board 3 is defined in the seat board 3. An opening 310 that can accommodate the plunger 2 is defined in one end of the cylinder 31, and a one-way valve device 4 is mounted on another opposite end of the cylinder 31. A top portion of the plunger 2 is connected to one end of a connecting rod 21, and the other end of the connecting rod 21 is assembled in an eccentric hole 122 of the flywheel 12 via a first bearing 23 and a first axle 22. The motor seat 32 is configured for holding the motor 6. A driving gear 61 is fixed on a driving shaft of the motor 6, and the driving shaft runs through the seat board 3. Two second bearings 24 are mounted in the through-hole 33 of the seat board 3 (in other embodiments, there can also be only one second bearing 24 mounted in the through-hole 33 of the seat board 3). The primary gear 11 and the flywheel 12 are movably assembled on the seat board 1 via a second axle 25 and the second bearings 24, so that the primary gear 11 engages with the driving gear 61. The plunger 2 is mounted in the cylinder 31 via the opening 310. The assembly state and structure of the flywheel device are shown in Figs 3 to 6.

As shown in Figs. 2 to 6, the aforementioned one-way valve device 4 includes a valve body. An air inlet 41 is defined in a top portion of the valve body. A first air outlet 42 and a second air outlet 43 are defined in two opposite side surfaces of the valve body respectively. A spring 45 and a valve plate 44 are received in the air inlet 41. The air inlet 41 is communicated with a bottom outlet of the cylinder 31. The valve plate 44 cooperates with the spring 45 to achieve a non-return one-way ventilation effect in the air inlet 41. The first air outlet 42 can be communicated with an air pipe (not shown), and be configured for aerating a tire or injecting air into a glue bucket. The second air outlet 43 is configured for mounting a pressure gage 5. Thus, when the motor 6 is working and drives the driving gear 61 to rotate, the primary gear 11 and the flywheel 12 can rotate at the same time. The flywheel 12 drives the plunger 2 to reciprocate in the cylinder 31 via the connecting rod 21, so that compressed air is generated in the cylinder 31 and is led to the valve body via the air inlet 41 of the one-way valve device 4, and then flows out from the first air outlet 42 and the second air outlet 43. The compressed air can be used to aerate a tire, and can also be injected into a glue bucket to drive glue in the glue bucket to flow into a tire and repair the tire. Users can know a pressure value of the compressed air using the pressure gage 5.

In the present application, the flywheel 12 is assembled on a side surface of the primary gear 11, so that an axial length of the overall flywheel device 1 is shorter, and the structure of the flywheel device 1 is simpler. Thus, a size of the flywheel device 1 is reduced, other elements can be arranged more rationally, and the manufacturing cost can be reduced.

While the embodiments of the present application are described with reference to the accompanying drawings above, the present application is not limited to the above-mentioned specific implementations. In fact, the above-mentioned specific implementations are intended to be exemplary not to be limiting. In the inspiration of the present application, those ordinary skills in the art can also make many modifications without breaking away from the subject of the present application and the protection scope of the claims. All these modifications belong to the protection of the present application.

## Claims

1. A flywheel device of an air compressor of a tire repair machine, wherein, the flywheel device comprises a primary gear and a flywheel fixed on a side surface of the primary gear.

2. The flywheel device of the air compressor of the tire repair machine according to claim 1, wherein, a plurality of threaded holes are defined in a side surface of the primary gear, and axes of the threaded holes are all parallel to an axial direction of the primary gear; a plurality of cavities corresponding to the threaded holes are defined in the flywheel, and axes of the cavities are parallel to an axial direction of the flywheel; and a plurality of screws run through the cavities, and are fixed in the threaded holes respectively to fix the flywheel on the primary gear.
